# EUROPÄISCHE PATENTSCHRIFT

(11) **EP 3 212 988 B1**
(45) Veröffentlichungstag und Bekanntmachung des Hinweises auf die Patenterteilung: **21.04.2021**
(21) Anmeldenummer: 15763496.5
(22) Anmeldetag: 16.09.2015
(51) Int. Cl.: F17C 1/16

(54) **DRUCKGASBEHÄLTER**
COMPRESSED GAS CONTAINER
BOUTEILLE DE GAZ COMPRIMÉ

(30) Priorität: 29.10.2014 DE 102014016023
(43) Veröffentlichungstag der Anmeldung: 06.09.2017
(73) Patentinhaber: Daimler AG, 70372 Stuttgart (DE)
(72) Erfinder: PEGEL, Sven, 73760 Ostfildern (DE); EISENER, Rafael, 70435 Stuttgart (DE)
(86) Internationale Anmeldenummer: PCT/EP2015/001852
(87) Internationale Veröffentlichungsnummer: WO 2016/066239

(56) Entgegenhaltungen:
- WO-A1-2013/083152
- DE-A1- 19 937 470
- DE-C1- 3 426 158
- US-A- 3 367 815
- US-A1- 2009 314 785
- US-A1- 2013 105 501
- US-B2- 7 867 589

## Beschreibung

Die Erfindung betrifft einen Druckgasbehälter nach der im Oberbegriff von Anspruch 1 näher definierten Art. Außerdem betrifft die Erfindung ein Verfahren zur Herstellung eines Druckgasbehälters gemäß dem Oberbegriff des Anspruchs 6. Die Erfindung betrifft letztlich außerdem die Verwendung eines erfindungsgemäßen Druckgasbehälters bzw. eines nach dem erfindungsgemäßen Verfahren hergestellten Druckgasbehälters.

Druckgasbehälter, beispielsweise zur Speicherung von Wasserstoff oder komprimiertem Erdgas, insbesondere in Fahrzeugen, sind aus dem allgemeinen Stand der Technik bekannt. Die derzeitige Spitze des Standes der Technik bildet dabei ein sogenannter Typ-IV-Druckgasbehälter, welcher aus einem metallischen Anschlusselement, einer Innenhülle, dem sogenannten Innenliner, aus Kunststoff sowie einer Ummantelung aus faserverstärktem Kunststoff, typischerweise aus Kohlefasern und einer Verbindungsmatrix, besteht. Dieser Aufbau erlaubt hohe Drücke von beispielsweise 70 MPa Nenndruck bei Wasserstoff. Nachteilig bei diesen Aufbauten ist es, dass ein derartiger Druckgasbehälter, insbesondere beim Einsatz mit Wasserstoff, im späteren Betrieb hohen thermischen und mechanischen Belastungen unterliegt. Ein Problem, das dabei auftritt, insbesondere auch weil der Innenliner gegenüber der Diffusion von Wasserstoff nie zu 100 Prozent dicht ausgeführt werden kann, besteht darin, dass Wasserstoff durch den Innenliner dringt und sich Blasen zwischen dem Innenliner und der Umhüllung aus faserverstärktem Kunststoff ausbilden. Dies ist höchst unerwünscht, da es insbesondere das zur Verfügung stehende Speichervolumen mindert. Außerdem kann bei einer erneuten Betankung der Wasserstoff von dem wieder größer werdenden Innenliner durch die Hülle aus faserverstärktem Kunststoffmaterial gedrückt werden, sodass Wasserstoff in die Umgebung gelangt und beispielsweise einen Alarm auslöst und/oder ein sicherheitskritisches Wasserstoff/Sauerstoffgemisch entsteht.

Ein derartiger Typ-IV-Druckgasbehälter ist beispielsweise in der DE 10 2010 033 623 A1 beschrieben. Der dortige Druckgasbehälter hat einen besonderen Aufbau, bei welchem der Innenliner aus mehreren Schichten unterschiedlicher Kunststoffe besteht, was diesen jedoch außerordentlich aufwändig in der Herstellung macht.

Im Allgemeinen dient der Innenliner nicht nur zum diffusionssicheren Einschließen des zu speichernden Gases sondern kann auch als Form für das Wickeln oder Flechten der Hülle aus faserverstärktem Kunststoff verwendet werden. In alternativen Herstellungsverfahren wird hierauf verzichtet und es wird ein verlorener Kern eingesetzt. So wird beispielsweise in der US 2013/0105501 A1 ein Druckgasbehälter beschrieben, bei welchem eine Kunststofffolie zur Ausbildung des Innenliners zuerst auf einen verlorenen Kern gewickelt wird, bevor diese Schicht von einer faserverstärkten Matrix als mechanische Tragschicht umgegeben wird. Trotz dieses alternativen Aufbaus mit einer gewickelten Innenschicht, also einer Art gewickelten Innenliner, handelt es sich auch hier um einen Druckgasspeicher vom Typ IV, welcher letztlich auch die oben genannten Nachteile aufweist. Zwar gibt die Schrift an, auf diese Art den gewickelten Innenliner besonders dicht ausführen zu können, bei der Speicherung von Wasserstoff wird dies alleine schon aus physikalischen Gründen jedoch nie zu 100 Prozent gelingen, sodass auch dieser Aufbau die genannten Nachteile aufweist.

Von Hybridtanks zur Speicherung kryogener Flüssigkeiten ist es aus der US 7,7867 582 B2 ebenfalls bekannt zwei diskrete Schichten mit unterschiedlichen Eigenschaften miteinander zu kombinieren.

Ferner ist aus der DE 199 37 470 A1 ein Druckgasgehälter bekannt. Der verzichtet auf eine mehrteilige Hülle und bildet die Hülle aus einem Thermoplasten mit relativ langen Verstärkungsfasern aus. Über die Dicke der Hülle kann dabei der Anteil der Fasern variieren.

Ein weiterer Behälter ist aus der US7867589B2 bekannt.

Zum weiteren allgemeinen Stand der Technik kann ferner auf die DE 34 26 158 C1, die WO 2013/083152 A1, die US 3,367,815 A sowie die US 2009/314785 A1 verwiesen werden.

Die Aufgabe der hier vorliegenden Erfindung besteht nun darin, einen Druckgasbehälter sowie ein Verfahren zu seiner Herstellung anzugeben, welche gegenüber dem Stand der Technik verbessert sind, und welche insbesondere die oben genannten Nachteile vermeiden.

Erfindungsgemäß wird diese Aufgabe durch einen Druckgasbehälter mit den Merkmalen im Anspruch 1 gelöst. Ein Herstellungsverfahren ist im Anspruch 6 mit den dortigen Merkmalen beschrieben. Vorteilhafte Weiterbildungen des Druckgasbehälters sowie des Herstellungsverfahrens ergeben sich aus den jeweils abhängigen Unteransprüchen. Im Anspruch 9 ist außerdem eine besonders bevorzugte Verwendung des erfindungsgemäßen Druckgasbehälters bzw. eines nach dem erfindungsgemäßen Verfahren hergestellten Druckgasbehälters angegeben.

Der Druckgasbehälter gemäß der Erfindung weist ähnlich wie die Druckgasbehälter im Stand der Technik eine ein Speichervolumen umgebende Hülle auf, welche eine Matrix und Verstärkungsfasern aufweist. Erfindungsgemäß ist es nun jedoch so, dass auf einen Liner verzichtet wird. Vielmehr ändert sich bei dem erfindungsgemäßen Druckgasbehälter die Zusammensetzung der Matrix zwischen der dem Speichervolumen zugewandten Bereich der Hülle und dem der Umgebung zugewandten Bereich der Hülle wenigstens einmal. Hierdurch können unterschiedliche Eigenschaften der Matrix in einer einzigen Hülle realisiert werden. Dies ermöglicht den Verzicht auf den Innenliner und damit eine Umgehung der typischerweise mit dem Innenliner einhergehenden Probleme und Nachteile. Entsprechend der bisher angewandten Nomenklatur könnte ein solcher Druckgasbehälter auch als Typ-V-Druckgasbehälter bezeichnet werden. Er besteht aus einer einzigen Hülle, welche durch eine wenigstens einmalige Veränderung der Zusammensetzung der Matrix über die Dicke der Hülle alle notwendigen Eigenschaften in einer einzigen Hülle vereint.

Dabei ist die Matrix in den dem Speichervolumen zugewandten Bereich auf Diffusionsdichtheit gegenüber dem zu speichernden Gas und in dem der Umgebung zugewandten Bereich auf die mechanischen Verbindungseigenschaften der Fasern durch die Matrix hin optimiert ausgebildet ist. Das Material der die Verstärkungsfasern umgebenden Matrix ist also im Innenbereich, dem dem Speichervolumen zugewandten Bereich besonders dicht ausgebildet und hat im Außenbereich, also dem der Umgebung zugewandten Bereich, besonders gute mechanische Eigenschaften, um eine sichere und zuverlässige Verbindung der Fasern untereinander zu gewährleisten, wobei in diesem Bereich die Dichtheit gegenüber dem Gas vernachlässigt werden kann, weil dieses durch den weiter innen liegenden im Zuge der physikalischen Möglichkeiten maximal diffusionsdichten Bereich so gut wie möglich abgehalten wird. Ein derartiger Druckgasbehälter lässt sich sehr kostenoptimiert herstellen, weil auf die komplexe Herstellung des Liners verzichtet werden kann. Durch den Wegfall des Liners werden außerdem entsprechende Schwachstellen, wie die Ausbildung von Gasblasen zwischen dem Liner und der Außenhülle, konsequent vermieden, da die für die Diffusionsdichtheit sorgende Schicht der Matrix fest mit den darüber liegenden Schichten der Matrix und den durch beide Schichten verlaufenden Fasern verbunden ist, sodass ein sehr kompakter und mechanisch zuverlässiger Aufbau entsteht. Der Aufbau ermöglicht dadurch eine erhöhte Langzeitstabilität. Außerdem erlaubt er eine sehr viel flexiblere Herstellung der Druckgasbehälter als bei bisherigen Aufbauten, da durch den Verzicht auf den ohnehin schon aufwändig herzustellenden Innenliner komplexe Tankformen sehr einfach möglich werden, beispielsweise Rohrtankkonzepte, gebogene Tankkonzepte und dergleichen. Diese lassen sich optimal in bestehende Bauräume integrieren, beispielsweise in Fahrzeugen.

Als Verstärkungsfasern lassen sich dabei gemäß einer vorteilhaften Weiterbildung der Idee Kohlenstofffasern verwenden. Die Matrix kann gemäß einer weiteren sehr vorteilhaften Ausgestaltung der Idee zumindest in ihrem dem Speichervolumen zugewandten Bereich auf der Basis von Polyurethan ausgebildet sein. Ein solches Polyurethan, insbesondere ein thermoplastisches Polyurethan, welches bei der Herstellung der faserverstärkten Hülle entsprechend aushärtet, weist höchste Dichtungseigenschaften auch gegenüber kritischen Gasen, wie beispielsweise Wasserstoff, welcher sehr leicht flüchtig ist, auf. Der Einsatz von derartigen Polyurethanen ist daher in dem erfindungsgemäßen Druckgasbehälter besonders vorteilhaft.

Eine weitere sehr günstige Ausgestaltung des erfindungsgemäßen Druckgasbehälters sieht es vor, dass die Hülle außerdem ein metallisches Anschlusselement aufweist, mit welchem sie fest verbunden ist. Ein solches metallisches Anschlusselement, welches auch als Boss bezeichnet wird, kann also wie auch bei den herkömmlichen Druckgasbehältern direkt integriert werden, insbesondere indem dies mit der einzigen Hülle fest verbunden wird. Gemäß einer sehr vorteilhaften Weiterbildung dieser Idee kann es dabei vorgesehen sein, dass im Kontaktbereich mit der Hülle mechanische Haltestrukturen und/oder eine Beschichtung zur Verbesserung der Anhaftung an dem Anschlusselement vorgesehen sind. Eine solche Beschichtung, insbesondere in Kombination mit einer mechanischen Aufrauhung, beispielsweise der Bereitstellung von Noppen oder dergleichen, ermöglicht eine ideale Anhaftung, da diese einerseits chemisch mit der Matrix und andererseits durch eine mechanische formschlüssige Verbindung mit den Verstärkungsfasern erfolgen kann, welche in den Strukturen, sofern diese vorhanden sind, eingelegt, beispielsweise eingeflochten, oder zwischen diese eingewickelt sein können.

Das erfindungsgemäße Verfahren zur Herstellung eines Druckgasbehälters mit einem von einer Hülle umgebenen Speichervolumen sieht es nun vor, dass die Hülle aus Verstärkungsfasern und wenigstens einem ausgehärteten Matrixmaterial gebildet wird. Erfindungsgemäß sieht es das Verfahren vor, dass die Verstärkungsfasern mit dem noch nicht ausgehärteten Matrixmaterial getränkt und direkt um einen verlorenen Kern sowie einen Verbindungsbereich eines Anschlusselements gewickelt und/oder geflochten werden, wobei das Matrixmaterial mit zunehmender Dicke der Hülle in seiner Zusammensetzung wenigstens einmal verändert wird. Auf dies Art lässt sich sehr einfach, effizient und hinsichtlich der Formgebung des späteren Druckgasspeichers sehr flexibel ein solcher herstellen. Durch die Veränderung der Zusammensetzung des Matrixmaterials über die Dicke der Hülle lassen sich insbesondere die oben bei dem erfindungsgemäßen Druckgasbehälter schon beschriebenen Eigenschaften sehr einfach und effizient erzielen.

In einer vorteilhaften Weiterbildung des erfindungsgemäßen Verfahrens kann es nun ferner vorgesehen sein, dass die unterschiedliche Zusammensetzung des Matrixmaterials durch eine Variation des Verhältnisses der ansonsten gleichen Ausgangsstoffe für die Matrix erzielt wird. Insbesondere können über die gesamte Dicke der Hülle hinweg dieselben Ausgangsstoffe zur Herstellung der Matrix verwendet werden. Dies macht den Aufbau besonders einfach und effizient in der Herstellung. So können beispielsweise für eine Polyurethanmatrix Harzsysteme auf der Basis von Isocyanaten und Polyolenen verwendet werden. Diese werden beim Benetzen oder kurz vor dem Benetzen der Verstärkungsfasern in einem kontinuierlichen Prozess vermengt. Durch die Auswahl des Anteils der Komponenten beim Vermengen lassen sich die physikalischen Eigenschaften des Harzsystems in einer vergleichsweise hohen Bandbreite einstellen. Durch eine gezielte Steuerung der Mischung der Matrixbestandteile, also des Verhältnisses der Ausgangsstoffe zueinander, lässt sich so während des Umwickelns und/oder Umflechtens des verlorenen Kerns eine gezielte Variation der Eigenschaften der Hülle erzielen. Insbesondere können die inneren Schichten auf ihre Barriereeigenschaften, also insbesondere auf ihre Diffusionsdichtheit gegenüber dem später zu speichernden Gas, hin optimiert werden. Die äußeren Schichten können hinsichtlich der mechanischen Eigenschaften optimiert werden, also in der Art, dass die Fasern besonders gut miteinander verbunden werden und daher ein sehr guter und zuverlässiger mechanischer Aufbau entsteht, welcher hoch belastbar ist.

Wie oben bereits angedeutet, lässt sich ein erfindungsgemäßer Druckgasbehälter oder ein nach dem erfindungsgemäßen Verfahren hergestellter Druckgasbehälter insbesondere sowohl hochflexibel hinsichtlich seiner Formgebung als auch sehr kostengünstig und gleichzeitig sehr zuverlässig und sicher herstellen. Dies macht den erfindungsgemäßen Druckgasbehälter bzw. den nach dem erfindungsgemäßen Verfahren hergestellten Druckgasbehälter besonders geeignet für Anwendungen mit hohen Stückzahlen, insbesondere also Speicheranwendungen in mit Wasserstoff oder komprimiertem Erdgas angetriebenen Fahrzeugen. Insbesondere bei derartigen Anwendungen spielt auch die hohe Zuverlässigkeit und Sicherheit eine entscheidende Rolle. Gleichzeitig entsteht ein weiterer gravierender Vorteil dadurch, dass die Behälterform sehr flexibel angepasst werden kann. Hierdurch können bestehende Hohlräume in dem Fahrzeug ausgenutzt werden, sodass sich bauraumoptimiert eine Steigerung der Reichweite des Fahrzeugs durch den erfindungsgemäßen Druckgasbehälter bzw. einen durch das erfindungsgemäße Verfahren hergestellten Druckgasbehälter ergibt. Die besonders bevorzugte Verwendung des erfindungsgemäßen Druckgasbehälters bzw. eines nach dem erfindungsgemäßen Verfahren hergestellten Druckgasbehälters liegt daher in seiner Anwendung in einem Fahrzeug, in welchem er gasförmigen Brennstoff speichert.

Weitere vorteilhafte Ausgestaltungen des erfindungsgemäßen Druckgasbehälters sowie seines Herstellungsverfahrens ergeben sich nun außerdem aus dem Ausführungsbeispiel, welches nachfolgend unter Bezugnahme auf die Figuren näher beschrieben ist.

Dabei zeigen:
- Fig. 1: eine Explosionsdarstellung aus einem Ausschnitt eines Druckgasbehälters;
- Fig. 2: einen ersten stark schematisierten Herstellungsschritt des erfindungsgemäßen Herstellungsverfahrens; und
- Fig. 3: einen zweiten stark schematisierten Herstellungsschritt des erfindungsgemäßen Herstellungsverfahrens.

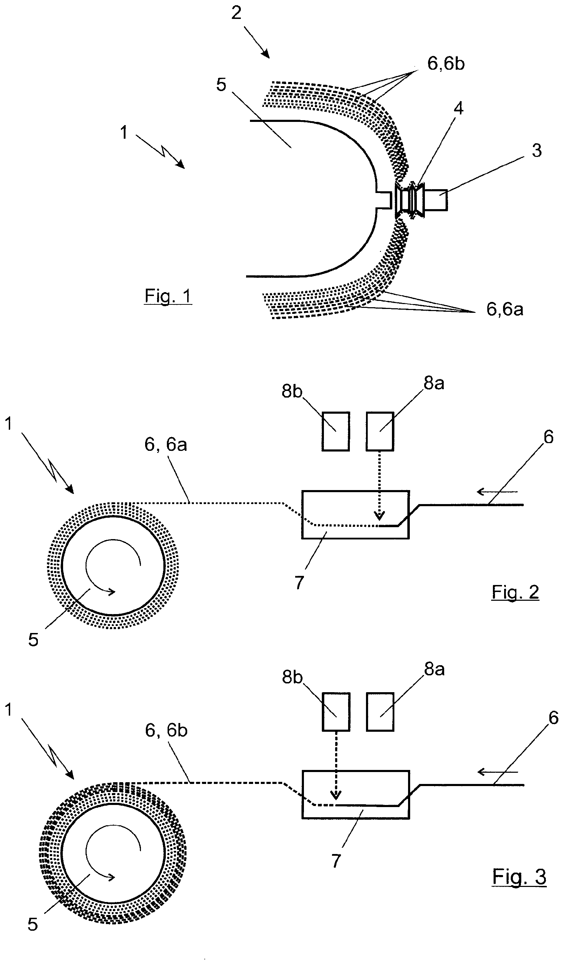

In der Darstellung der Figur 1 ist ein Ausschnitt aus einem Druckgasbehälter 1 in einer Explosionsdarstellung zu erkennen. Der Druckgasbehälter 1 wird dabei aus einer Hülle 2 sowie einem Anschlusselement, dem sogenannten Boss 3, gebildet. Im Randbereich des Anschlusselements 3, in welchem dieses später mit der Hülle 2 verbunden sein wird, ist außerdem ein Haftvermittler 4 strichpunktiert angedeutet. Der Boss 3 wird auf eine verlorene Form 5, beispielsweise aus Styropor, aufgesteckt. Anschließend wird er zusammen mit dieser verlorenen Form 5 mit der Hülle 2 umgeben. Die Hülle 2 umfasst Verstärkungsfasern 6, insbesondere Kohlenstofffasern. Diese Fasern sind in der Darstellung der Figur 1 angedeutet und teilweise mit dem Bezugszeichen 6 versehen. Sie umgeben ein späteres Speichervolumen, das an die Stelle der verlorenen Form 5 tritt, wenn diese entsprechend entfernt, beispielsweise durch Auflösen mit einem chemischen Lösungsmittel aus dem späteren Druckgasbehälter 2 ausgespült wird. Die dem späteren Speichervolumen bzw. der verlorenen Form 5 zugewandten Verstärkungsfasern 6 sind in der Darstellung der Figur 1 punktiert dargestellt. Diese nachfolgend mit 6a bezeichneten Fasern werden dabei über ein erstes Matrixmaterial miteinander verbunden, auf welches später noch näher eingegangen wird. Die weiter von der verlorenen Form 5 bzw. dem Speichervolumen abgewandt liegenden Verstärkungsfasern 6, welche also der Umgebung des späteren Druckgasbehälters 1 zugewandt sind, sind in der Darstellung der Figur 1 gestrichelt dargestellt und mit 6b bezeichnet. Es handelt sich dabei um dieselben Fasern 6, diese sind jedoch mit einem anderen Matrixmaterial versehen.

Die Herstellung des Druckgasbehälters 1 ist nun in den Figuren 2 und 3 am Beispiel eines Aufbaus der Hülle 2 aus gewickelten Verstärkungsfasern 6 beispielhaft angedeutet. Der Aufbau könnte genauso gut mit geflochtenen Fasern 6 oder einer Kombination von gewickelten und geflochtenen Fasern 6, beispielsweise schichtweise abwechselnd, realisiert werden.

In der Darstellung der Figur 2 ist die Verstärkungsfaser 6 rechts durchgezogen dargestellt. Sie läuft durch eine Vorrichtung 7, in welcher sie mit dem Matrixmaterial getränkt wird. In der beispielhaften Darstellung sind dabei zwei Vorratsbehälter 8a, 8b für das Matrixmaterial zu erkennen. In der Darstellung der Figur 2, welches das Wickeln der inneren Schichten auf die verlorene Form 5 zeigt, also der später dem Speichervolumen zugewandten Schichten, erfolgt das Tränken der Faser 6 mit dem Matrixmaterial aus dem Vorratsbehälter 8a. Dieses Matrixmaterial sorgt nach dem Aushärten für eine Matrix mit Eigenschaften, welche diese insbesondere als Diffusions- bzw. Permeationsbarriere gegen das später in dem Druckgasbehälter 1 zu speichernde Gas ideal geeignet machen. Im weiteren Verlauf sind die nun getränkten Fasern 6 analog zur Darstellung in Figur 1 punktiert dargestellt und werden aufgrund der Tränkung mit dem Matrixmaterial aus dem Vorratsbehälter 8a mit 6a bezeichnet. Die Fasern 6a werden auf den verlorenen Kern 5, in diesem Beispiel aufgewickelt, und bilden die inneren Schichten, welche einerseits ordentliche mechanische Eigenschaften aufgrund der Matrix und der Verstärkungsfaser 6 aufweisen und welche andererseits durch das Tränken der Verstärkungsfaser 6 mit dem Matrixmaterial aus dem Vorratsbehälter 8a sehr gute Eigenschaften zur Ausbildung der gewünschten Diffusions- bzw. Permeationsbarriere haben.

In der Darstellung der Figur 3 ist der weitere Verlauf des Herstellungsverfahrens zu erkennen. Dieselbe Faser 6 wird wiederum der Vorrichtung 7 zugeführt. Nun erfolgt das Tränken der Faser 6 mit dem Matrixmaterial aus dem Vorratsbehälter 8b. In der Folge wird die getränkte Faser 6 mit 6b bezeichnet und analog zur Darstellung in Figur 1 gestrichelt dargestellt. Diese Faser 6b wird nun im weiter außen liegenden Verlauf der Hülle 2 auf den verlorenen Kern 5 gewickelt. Das im Vorratsbehälter 8b bevorratete Matrixmaterial kann nun insbesondere so ausgebildet sein, dass die Permeations- bzw. Diffusionsbeständigkeit hier eine untergeordnete Rolle spielt, während die mechanischen Eigenschaften hinsichtlich einer zuverlässigen Verbindung der einzelnen Fasern 6 bevorzugt ist. Hierdurch entsteht insgesamt ein Aufbau einer einzigen einstückigen Hülle 2, welche in ihrem Inneren dem Speichervolumen bzw. dem verlorenen Kern 5 zugewandten Bereich andere Eigenschaften aufweist als im äußeren Bereich. Hierdurch lässt sich in einer einzigen Hülle 2 sowohl die Funktionalität der Diffusionsdichtheit als auch der mechanischen Belastbarkeit des Druckgasbehälters 1 einfach und effizient realisieren.

Neben der hier beschriebenen Verwendung von zwei unterschiedlichen Matrixmaterialien in den Vorratsbehältern 8a, 8b wäre es selbstverständlich auch denkbar und möglich, dieselben Ausgangsstoffe für die Matrix zu verwenden, welche in unterschiedlichen Verhältnissen gemischt werden. Insbesondere erlaubt ein solcher Aufbau eine kontinuierliche Änderung der Eigenschaften, also einen kontinuierlichen Übergang des Mischungsverhältnisses des Matrixmaterials von der Innenseite der Hülle 2 zu ihrer Außenseite, sodass eine höhere Stabilität und eine verbesserte mechanische Festigkeit der Hülle 2 durch den Verzicht auf das sprunghafte Ändern von Eigenschaften erzielt werden kann.

## Patentansprüche

1. Druckgasbehälter (1) mit einer ein Speichervolumen umgebenden Hülle (2), welche eine Matrix und Verstärkungsfasern (6, 6a, 6b) aufweist,
**dadurch gekennzeichnet, dass**
sich die Zusammensetzung der Matrix zwischen dem dem Speichervolumen zugewandten Bereich der Hülle (2) und dem der Umgebung zugewandten Bereich der Hülle (2) wenigstens einmal ändert, wobei eine für die Diffusionsdichtheit sorgende Schicht der Matrix fest mit den darüber liegenden Schichten der Matrix und den durch die Schichten verlaufenden Verstärkungsfasern verbunden ist.

2. Druckgasbehälter (1) nach Anspruch 1,
**dadurch gekennzeichnet, dass**
die Verstärkungsfasern (6, 6a, 6b) Kohlenstofffasern aufweisen.

3. Druckgasbehälter (1) nach Anspruch 1 oder 2,
**dadurch gekennzeichnet, dass**
die Matrix zumindest in ihrem dem Speichervolumen zugewandten Bereich auf der Basis von Polyurethanen ausgebildet ist.

4. Druckgasbehälter (1) nach einem der Ansprüche 1 bis 3,
**dadurch gekennzeichnet, dass**
die Hülle (2) mit einem, insbesondere metallischen, Anschlusselement (3) fest verbunden ist.

5. Druckgasbehälter (1) nach Anspruch 4,
**dadurch gekennzeichnet, dass**
das Anschlusselement (3) im Kontaktbereich mit der Hülle (2) mechanische Haltestrukturen und/oder eine Beschichtung (4) zur Verbesserung der Anhaftung aufweist.

6. Verfahren zur Herstellung eines Druckgasbehälters (1) mit einem von einer Hülle (2) umgebenen Speichervolumen, wobei die Hülle (2) aus Verstärkungsfasern (6, 6a, 6b) und wenigstens einem ausgehärteten Matrixmaterial gebildet wird, **dadurch gekennzeichnet, dass**
die Verstärkungsfasern (6, 6a, 6b) mit dem noch nicht ausgehärteten Matrixmaterial getränkt und direkt um einen verlorenen Kern (5) sowie einem Verbindungsbereich eines Anschlusselements (3) gewickelt und/oder geflochten werden, wobei das Matrixmaterial mit zunehmender Dicke der einzigen einstückigen Hülle (2) in seiner Zusammensetzung wenigstens einmal verändert wird.

7. Verfahren nach Anspruch 6,
**dadurch gekennzeichnet, dass**
die unterschiedliche Zusammensetzung des Matrixmaterials durch eine Variation des Verhältnisses von ansonsten gleichen Ausgangsstoffen für die Matrix erzielt wird.

8. Verwendung eines Druckgasspeichers (1) nach einem der Ansprüche 1 bis 5 und/oder eines nach dem Verfahren gemäß einem der Ansprüche 6 bis 7 hergestellten Druckgasbehälters (1) zur Speicherung von gasförmigem Brennstoff, insbesondere Wasserstoff, in einem Fahrzeug.

## Claims

1. Compressed gas container (1) having a casing (2) surrounding a storage volume, which casing (2) comprises a matrix and reinforcing fibers (6, 6a, 6b), **characterized in that**
the composition of the matrix changes at least once between the region of the casing (2) facing the storage volume and the region of the casing (2) facing the environment, wherein a layer of the matrix providing diffusion tightness is firmly connected to the layers of the matrix lying above it and to the reinforcing fibers extending through the layers.

2. Compressed gas container (1) according to claim 1, **characterized in that** the reinforcing fibers (6, 6a, 6b) comprise carbon fibers.

3. Compressed gas container (1) according to claim 1 or 2, **characterized in that** the matrix is designed on the basis of polyurethanes at least in its region facing the storage volume.

4. Compressed gas container (1) according to one of claims 1 to 3, **characterized in that** the casing (2) is firmly connected to a, in particular metallic, connecting element (3).

5. Compressed gas container (1) according to claim 4, **characterized in that** the connecting element (3) has mechanical retaining structures and/or a coating (4) in the contact region with the casing (2) to improve adhesion.

6. Method for producing a compressed gas container (1) having a storage volume surrounded by a casing (2), wherein the casing (2) is formed from reinforcing fibers (6, 6a, 6b) and at least one cured matrix material,
**characterized in that**
the reinforcing fibers (6, 6a, 6b) are impregnated with the not yet cured matrix material and are directly wound and/or braided around a lost core (5) and a connecting region of a connecting element (3), wherein the matrix material is changed in its composition at least once with increasing thickness of the single integral casing (2).

7. Method according to claim 6, **characterized in that** the different composition of the matrix material is achieved by varying the ratio of otherwise equal starting materials for the matrix.

8. Use of a compressed gas container (1) according to one of claims 1 to 5 and/or a compressed gas container (1) produced by the method according to one of claims 6 to 7 for storing gaseous fuel, in particular hydrogen, in a vehicle.

## Revendications

1. Réservoir de gaz comprimé (1) doté d'une enveloppe (2) qui entoure un volume de stockage et présente une matrice et des fibres de renforcement (6, 6a, 6b), **caractérisé en ce que**
la composition de la matrice change au moins une fois entre la zone de l'enveloppe (2) tournée vers le volume de stockage et la zone de l'enveloppe (2) tournée vers l'environnement, une couche de la matrice assurant l'étanchéité à la diffusion étant fermement reliée aux couches de la matrice situées au-dessus et aux fibres de renforcement s'étendant à travers les couches.

2. Réservoir de gaz comprimé (1) selon la revendication 1,
**caractérisé en ce que**
les fibres de renforcement (6, 6a, 6b) présentent des fibres de carbone.

3. Réservoir de gaz comprimé (1) selon la revendication 1 ou 2,
**caractérisé en ce que**
la matrice est réalisée à base de polyuréthanes au moins dans sa zone tournée vers le volume de stockage.

4. Réservoir de gaz comprimé (1) selon l'une des revendications 1 à 3,
**caractérisé en ce que**
l'enveloppe (2) est fermement reliée à un élément de raccordement (3), en particulier métallique.

5. Réservoir de gaz comprimé (1) selon la revendication 4,
**caractérisé en ce que**
l'élément de raccordement (3) présente des structures de retenue mécaniques et/ou un revêtement (4) pour améliorer l'adhérence dans la zone de contact avec l'enveloppe (2).

6. Procédé de fabrication d'un réservoir de gaz comprimé (1) ayant un volume de stockage entouré d'une enveloppe (2), l'enveloppe (2) étant formée de fibres de renforcement (6, 6a, 6b) et d'au moins un matériau de matrice durci, **caractérisé en ce que**
les fibres de renforcement (6, 6a, 6b) sont imprégnées du matériau de matrice non encore durci et directement enroulées et/ou tressées autour d'un noyau perdu (5) ainsi que d'une zone de liaison d'un élément de raccordement (3), la composition du matériau de matrice changeant au moins une fois à mesure que l'épaisseur de l'unique enveloppe d'une seule pièce (2) augmente.

7. Procédé selon la revendication 6,
**caractérisé en ce que**
la composition différente du matériau de matrice est obtenue en faisant varier le rapport des matériaux de départ, par ailleurs égaux, pour la matrice.

8. Utilisation d'un réservoir de stockage de gaz comprimé (1) selon l'une des revendications 1 à 5 et/ou d'un réservoir de stockage de gaz comprimé (1) fabriqué selon le procédé décrit dans l'une des revendications 6 à 7 pour stocker du carburant gazeux, en particulier de l'hydrogène, dans un véhicule.
